# EUROPEAN PATENT APPLICATION

(11) **EP 0 864 988 A1**
(43) Date of publication of application: **16.09.1998**
(21) Application number: 98301326.9
(22) Date of filing: 24.02.1998
(51) Int. Cl.: G06F 17/24

(54) **Document management system and document management method**

(30) Priority: 11.03.1997 JP 55820/97; 11.11.1997 JP 308753/97
(71) Applicant: Matsushita Electric Industrial Co., Ltd., Kadoma-shi, Osaka-fu, 571-8501 (JP)
(72) Inventor: Hirose, Atsushi, Sanda-shi, Hyogo-ken (JP)
(74) Representative: Barnfather, Karl Jon, Dr.

(57) **Abstract**

The present invention is a document management system utilizing tags, and enables complex retrieval of document. In said document management system, it is so arranged that a tag bundle management means 4 manages at least one kind of tag bundle 60 based on visually recognizable attributes, and a tag bundle display means 5 displays the tag bundle 60 managed by said tag bundle management means 4 based on said attributes. The user peels off tags one by one from a specific tag bundle 60 thus displayed and attaches them to object page of the object document. The tags 61 thus attached are managed by a tag management means 7 and, as the user selects on of the tag bundles displayed by said tag bundle display means 5, the tag bundle retrieval means 8 searches all tags 61 peeled off from the selected tag bundle 60, by referring to the information of the tag bundle 60 managed by said tag control means 7, while a tagged document retrieval means 9 searches and displays the document to which the tag 61 found by said tag bundle retrieval means 8 is attached, by referring to the information of the tag 61 managed by said tag management means 7. Moreover, when some of the tags of the document thus displayed is instructed, an object tag bundle switching means 50 switches the instructed tag and the attributes of the tag bundle to which that tag belongs, and displays the corresponding document.

## Description

### FIELD OF THE INVENTION

The present invention relates to a document management system and a document management method, more specifically to a document management system and a document management method utilizing tags.

### BACKGROUND OF THE INVENTION

As the volume and the number of kinds of documents increase, their management method comes to be remarkably reflected in the retrieval efficiency of the documents. In a conventional document management system, the object document can be taken out by the user's instruction in the state where documents in the form of text data or image data are stored in a large number in a storing device. As such document management system, a document management system designed to take-out the object document by utilizing keyword was formerly used. However, lack of freedom in the keywords available for use was a problem of that system and, these days, classification and management of documents by folder, which is also used for MACOS (OS of Apple Co.) or WINDOWS 95 (OS of Microsoft Co.), came to be most commonly used because of better actualty and ease of use.

In a management by folder, the user can store documents by assigning them to a plural number of folders with different names, and this makes it possible to classify and arrange the documents as if they were files in the real world by selecting said names along the situation of use of the user.

Moreover, with attention to the fact that utilization of tag as mark is practiced in the real document management, an electronic document management utilizing such tag as mark is also disclosed in the Japanese patent laid-open publication No. 59-83455, for example.

Namely, it is so devised as to attach, instead of said document names, tags serving as marks on the documents at the time of storage, and identify the object documents by utilizing said tags.

Furthermore, a method using different kinds of tags (tags in different colours, tags in different shapes, for example) is disclosed in the Japanese patent laid-open publication No. 6-139281. Namely, it is so arranged as to register documents by giving weight corresponding to the number of tags of one same kind attached to specific documents and, when taking out a document, treat it according to said weight.

Still more, the Japanese patent laid-open publication No. 6-162108 discloses a method which consists in registering, at the time of registration of documents, by attaching orders expressed in numerals on a tag attached to particular documen and, when taking out the document, treating it according to said order.

However, document management by folder, in which one document can be stored in one folder only in the same way as files in the real world, has the defect that it is impossible to classify one document in a plural number of genres. Therefore, there are cases where the user has difficulty in judging in which folder he should store a document belonging to a plural number of genres or a document the genre of which is unclear. In addition, it often happens that, even for a document once stored, there is no way to know in which folder the document was stored if its genre is unclear.

Moreover, the role of the tag in said conventional document management method utilizing tags was simply that of marking (contents of the Japanese patent laid-open publication No. 59-83455, for example), and it was impossible to make systematic retrieval by relating the tag with any specific factor such as the genre to which the tagged document belongs (especially a plural number of genres in the case where a single document belongs to a plural number of genres).

The methods disclosed in the Japanese patent laid-open publication No. No. 6-139281 and the Japanese patent laid-open publication No. 6-162108 intend to make systematic management at least among documents having one same kind of tag (documents of one same genre) by giving weight to one kind of tag, but do not realize any systemization at all among documents ranging over other genres or in one same document.

Therefore, the object of the present invention, proposed in view of said conventional circumstances, is to provide a document management system and a document management method capable of assigning a single document to a plural number of genres, by performing a simple operation of peeling tags from a bundle of tags and attaching them to the documents managed by folder. Another object of the present invention is to provide a document management system and a document management method enabling flexible retrieval of documents not only in one same genre but also documents ranging over a plural number of genres.

### SUMMARY OF THE INVENTION

To achieve said objects, the present invention adopts the means described below. First, the present invention presupposes a document management system provided with a document management means 1 for managing electronic documents stored in a storing means, and a document display means 2 for displaying the object document with an input of matters identifying the electronic document concerned.

In said document management system, it is so arranged that a tag bundle management means 4 manages at least one kind of tag bundle 60 based on visually recognizable attributes, and that a tag bundle display means 5 displays the tag bundle 60 managed by said tag bundle management means 4 based on said attributes. In this state, a tag pasting means 6 provides the user with an operation of peeling off one tag 61 from a specific tag bundle 60 displayed by the tag bundle display means 5 and attaching it to the document displayed by said document display means 2, thus making it possible for the user to attach the tag 61 to the document, by the same procedure as that of a normal tag attaching work by hand, while watching the computer screen.

The tags 61 attached this way are managed by a tag management means 7. And, as the user selects one of the tag bundles 60 indicated on said tag bundle display means 5, a tag retrieval means by tag bundles 8 retrieved the all tags corresponding to the selected tag bundles by refering to the information of the tag bundle 60 managed by said tag management means 7. Moreover, a tagged document retrieval means 9 searches the document with tag 61 retrieved by said tag retrieval means by tag bundles 8, by referring to the information of the tag 61 managed by said tag management means 7.

As a result, it becomes possible to manage documents not by folder but by tag bundle 60. Furthermore, this management can be made more flexibly by such means as giving name to the tag bundle 60 or the tag 61 as explained hereafter, or by also managing the position (page) at which the tag 61 is attached.

Said tag management means 7 manages at least 2 kinds of information i.e. the tag bundle 60 from which a tag 61 was peeled off and the document to which the tag was attached, so that they may be referred to by said tag retrieval means by tag bundles 8 and said tagged document retrieval means 9 on the occasion of retrieval of the tag 61 and the document. In addition, said tag management means 7 manages the information of position at which the tag 61 is attached (attaching page) so that said tagged document retrieval means 9 may also search the attaching position at the time of retrieval of the document carrying tag 61, making it possible for said document display means 2 to refer to that information and, when instructed by the user, display the position where the tag 61 is attached such as a specific page, for example.

Said tag bundle management means 4 manages the name of tag bundle 60 as one of the attribute information items of the tag bundle 60 managed, also making it possible for a tag bundle name retrieval means 10 to search the tag bundle 60 with said tag bundle name.

An in-document tag retrieval means 11 can search all tags 61 attached to one document, by referring to the information managed by said tag management means 7, and display the tag 61 obtained on an in-document tag information display means 12, together with the attribute information of that tag bundle 60. This makes it possible to know what kinds of tag 61 are attached to one document i.e. to what genre (or genres in the case where there are a plural number of tags) the document belongs. While the above explanation is given for a case where all in-document tags are displayed, it is also possible to display the attribute information of the tag bundle 60 of a representative tag 61 determined based on a certain rule or determined based on the user's instruction, together with the document. This enables adaptation also to a case with a narrow display area.

It is also possible to arrange in such a way that a tag name setting means 13 sets a name to the tag 61 attached to the document by said tag pasting means 6, the tag management means 7 manages the tag name set this way as one of the attributes of the tag 61, and the in-document tag information display means 12 displays, by referring to this information, the tag name together with the attributes of said tag bundle 60 and the document at a time. This enables retrieval in the respective genres of tag bundle 60, tag bundle name and tag name. Said tag name setting means 13 may also be constructed in a way to automatically generate tag name based on such data as date, etc.

The tagged documents searched by said tagged document retrieval means 9 and displayed in the form of a list can be used for a complex retrieval as described below. Namely, first, by selecting a specific document among said tagged documents displayed in list, the in-document tag retrieval means 11 searches all tags attached on the document concerned while the in-document tag information display means 12 displays said all tags in expanded view together with the corresponding document (page of the corresponding document, to be exact).

In this state, by selecting a specific tag among said displayed tags, an object tag bundle switching means 50 drives, based on the selected tag and the attribute of the tag bundle to which that tag belongs, said tagged document retrieval means 9 and said in-document tag retrieval means 11. This makes it possible to not only make retrieval in one direction as tag bundle to tag to document, but also search other tagged documents from the displayed document.

### BRIEF DESCRIPTION OF THE DRAWINGS

Fig. 1 is a construction drawing of the system by the first embodiment of the present invention.

Fig. 2 is a motion explanatory drawing of the system by the first embodiment of the present invention.

Fig. 3 is a motion explanatory drawing of the system by the second embodiment of the present invention.

Fig. 4 is a construction drawing of the system by the third embodiment of the present invention.

Fig. 5 is a motion explanatory drawing of the system by the third embodiment of the present invention.

Fig. 6 is a construction drawing of the system by the fourth embodiment of the present invention.

Fig. 7 is a motion explanatory drawing of the system by the fourth embodiment of the present invention.

Fig. 8 is a construction drawing of the system by the sixth embodiment of the present invention.

Fig. 9 is a motion explanatory drawing of the system by the sixth embodiment of the present invention.

Fig. 10 is a construction drawing of the system by the seventh embodiment of the present invention.

Fig. 11 is a motion explanatory drawing of the system by the seventh embodiment of the present invention.

Fig. 12 is a conceptual drawing showing a tag table.

Fig. 13 is a conceptual drawing showing a tag bundle table.

Fig. 14 is a conceptual drawing showing a document table.

Fig. 15 is a conceptual drawing of the picture used for the working of the present invention.

Fig. 16 is a conceptual drawing of the picture at the time of preparation of a tag bundle.

Fig. 17 is a conceptual drawing of the picture at the time of attaching of tag.

Fig. 18 is a conceptual drawing showing an example of picture in expanded view.

Fig. 19 is a conceptual drawing of the picture at the time of retrieval of tag bundle name (tag name).

Fig. 20 is a conceptual drawing showing an example of display of results of retrieval by in-document tag retrieval.

Fig. 21 is a conceptual drawing showing an example of display of results of retrieval by in-document tag retrieval.

Fig. 22 is a functional block diagram showing the eighth embodiment of the present invention.

Fig. 23 is a flow chart showing the procedure of the eighth embodiment of the present invention.

Fig. 24 is a conceptual drawing showing an example of picture used for the eighth embodiment of the present invention.

### EMBODIMENTS OF THE INVENTION

### [Embodiment 1]

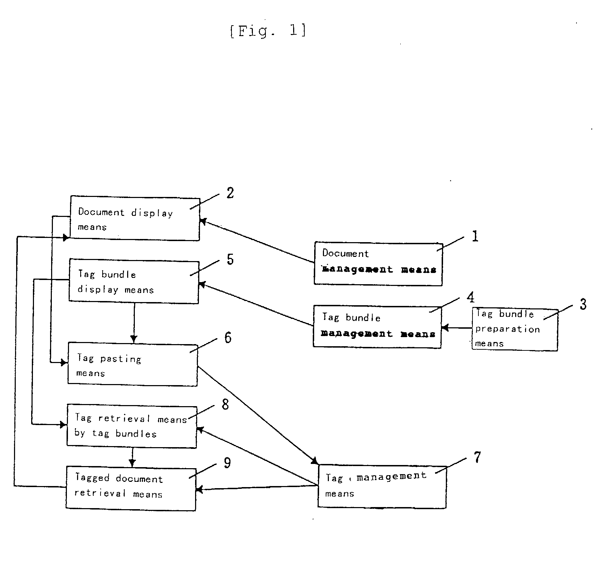

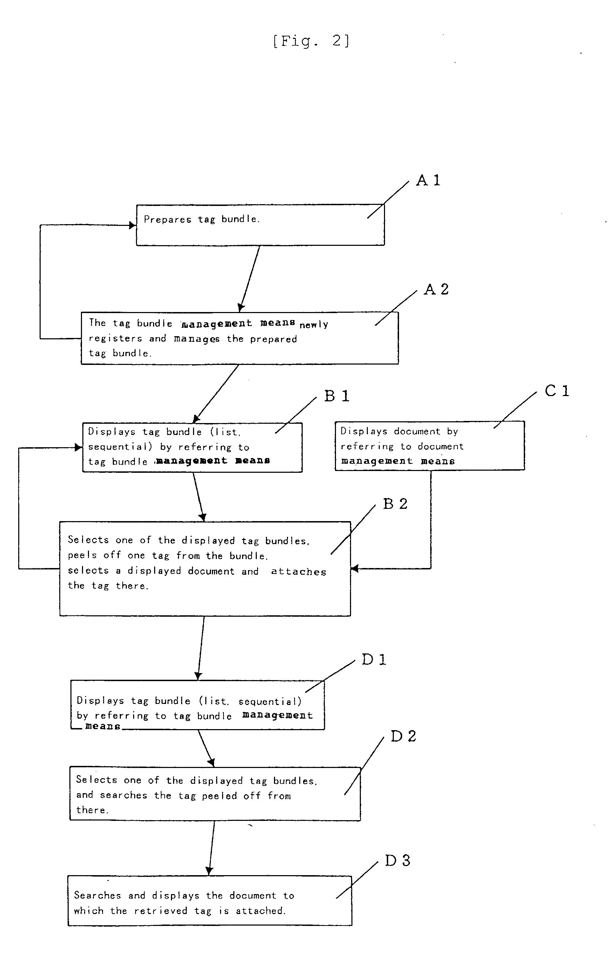

Fig. 1 is a construction drawing of the document management system utilizing tags in the first embodiment of the present invention, while Fig. 2 is a flow chart showing the working procedure of that system. The construction of this embodiment will be explained hereafter together with its working procedure.

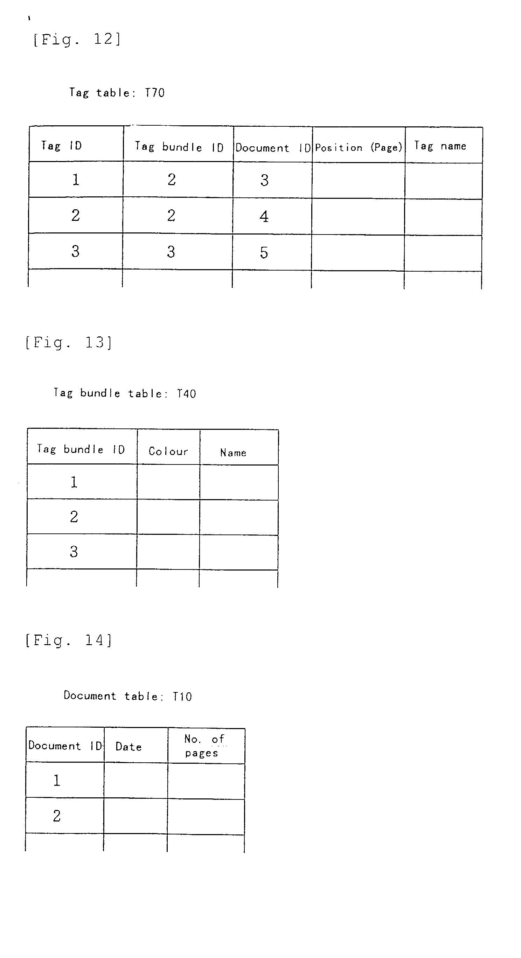

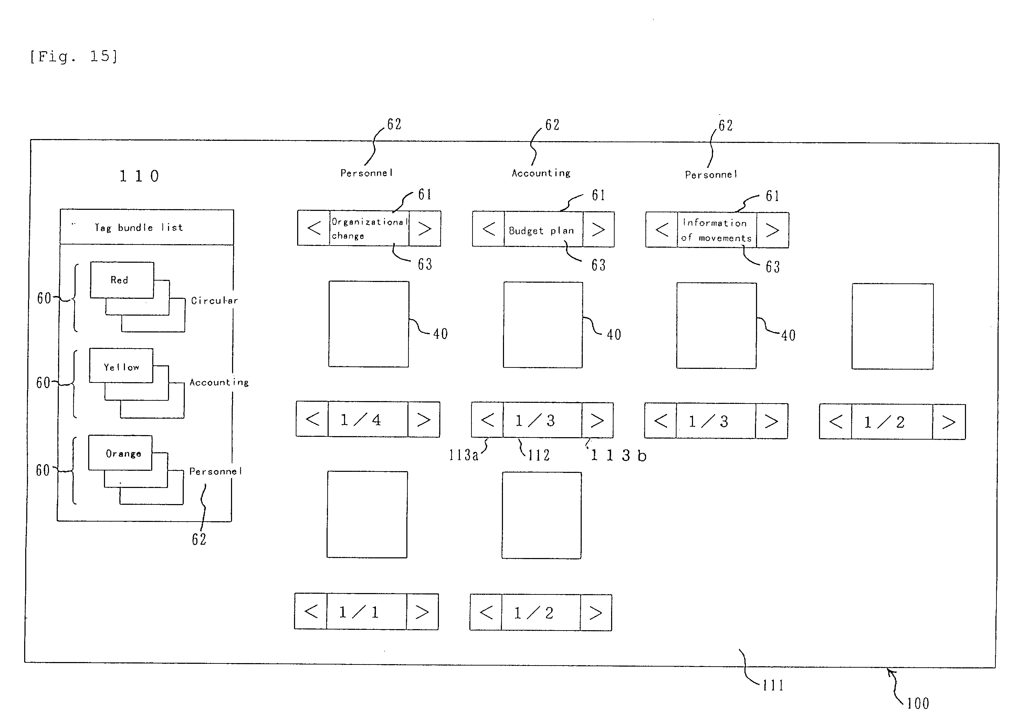

The document management means 1 indicated in Fig. 1 registers document ID for identifying document and other necessary attributes in the document table T10 for management, as shown in Fig. 14. The electronic documents managed by this document management means 1 can be displayed in the form of a list, based on the user's instruction, by the document display means 2 in the document list display field 111 on the display 100, as shown in Fig. 15.

The tag bundle preparing means 3 prepares tags by the procedure described below. First, based on the user's instruction (select either "Prepare tag bundle" on the menu page or the "New" key displayed at a corner of the picture), the tag bundle preparing means 3 displays a tag bundle preparation frame 130 in the display to enable selection of a strip of a proper colour from among a large number of colour specimens 30a, 30b, --- in the strip displayed in the preparation frame 130.

In this picture, the user can select a strip of prescribed colour and input a proper name such as a name along the genre, for example, in the upper frame 131 as required. (The input of tag bundle name will be explained in detail later.) In the above example, the colour becomes an attribute of the tag concerned and, when a name is given, both the colour and the name become attributes of the tag bundle (Fig. 2, step A1).

The tag bundle prepared by the tag bundle preparing means 3 as above is managed by the tag bundle management means 4 as shown in Fig. 13. Namely, each tag bundle is furnished with a tag bundle ID for identification, and this tag bundle ID is registered in the tag bundle table T40 together with the colour and the name as attributes of each tag bundle, to manage (step A2).

The tag bundle display means 5 displays the tag bundle 60 managed by the tag bundle management means 4 as explained above in list in the tag bundle display field 110 of the display 100 as shown in Fig. 15, in a state enabling selection of tag bundle 60 by the user (step B1). This display is made with said attributes (colour, name) of tag bundle 60. Here, said display in list includes a case where all managed tag bundles 60 are displayed or a case where the user renews the contents of display one after another by using the scroll bar. On the other hand, the document display means 2 refers to the information controlled by the document management means 1 as described earlier, and displays the documents 40 in list in the document list display field 111 of the display 100 in a state selectable by the user (step C1). The tag 61 displayed on 3 pictures on the left in the upper stage in this document list display field 111 disclosed in Fig. 15 is displayed only for the document for which the tag attaching explained hereafter has been executed.

Here, said display of documents in list refers to a case where the searched documents are displayed flatly in the form of a list or, when the display frame is small, a case where the contents of the list can be renewed sequentially based on the user's instruction (click the increment key or the decrement key of the non-illustrated scroll bar, for example).

The tag pasting means 6 provides the user with an operation of selecting a specific tag bundle 60, in the state where the tag bundle display means 5 displays the tag bundles as described above and that the document display means 2 displays the documents 40 in the display 100, peeling off one tag 61 from that tag bundle 60 and attaching it to a specific document 40 displayed by said document display means 2.

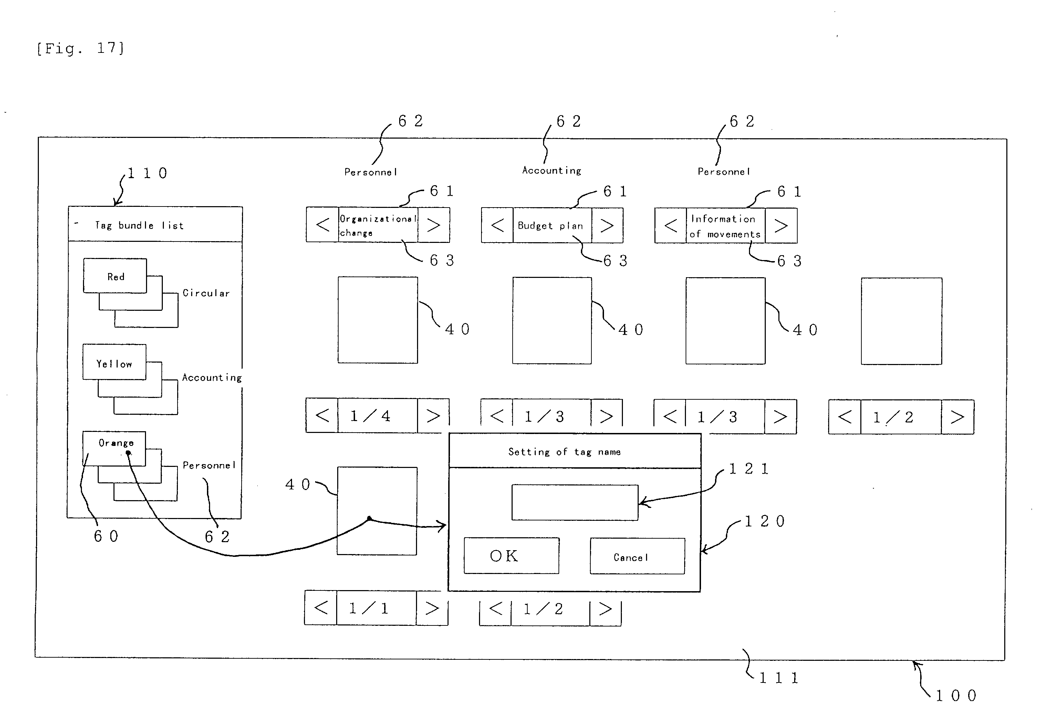

At that time, a variety of methods are conceivable as concrete attaching method. For example, indicating a specific tag bundle 60 among a plural number of tag bundles displayed on the tag bundle display means 5 as shown in Fig. 17 with the cursor, and attaching it to the object document 40 by drag-and-drop system. Here, a popup frame 120 is further displayed and the tag name can be input in the tag name input frame 121 in this popup frame 120, but the input procss of tag name will be explained later.

As described above, when the tag 61 peeled off from a specific tag bundle 60 is attached on one of the documents 40 on display, the attributes (tag bundle 60, document 40) of this attached tag 61 are newly registered and managed on the tag table T70 controlled by the tag management means 7 described hereafter (step B2).

Said tag management means 7 registers the information of the tag 61 attached to the document 40 as described above, i.e. tag ID, tag bundle ID and document ID of the document 40 to which the tag is attached, as well as attaching position (page) of the tag 61 to be explained later and tag name as required, in the tag table T70, as shown in Fig. 12, for control.

The documents 40 to which the tag has been attached as above become available for retrieval by tag bundle retrieval means 8 as described below. Namely, as shown in Fig. 15, the tag bundle display means 5 displays the tag bundle 60 prepared as above, in the tag bundle display field 110, by referring to the tag bundle management means 4 (step D1).

Here, the processing moves to that of document search as described below if the user clicks the "Search" (non-illustrated) key. Namely, if the user selects one of the tag bundles 60 displayed as above, the tag bundle retrieval means 8 refers to the information (tag bundle ID here) of the tag 61 controlled by the tag management means 7, searches all tags 61 peeled off from the selected tag bundle (said selected tag bundle) 60, and delivers the results to the tagged document retrieval means 9 (step D2).

If the tagged document retrieval means 9 received the results of retrieval process by the tag bundle retrieval means 8 as described above, this tagged document retrieval means 9 searches the document 40 to which the tag 61 found by the tag bundle retrieval means 8 is attached as above, by referring to the document table T10 controlled by the tag management means 7 indicated in Fig. 12 (step D3). The results of this search are delivered to the document display means 2, and displayed in the document list display field 111 on the display.

### [Embodiment 2]

Said tag management means 7 can manage the information of attaching position (page, for example), in addition to said detached tag bundle 60 and tagged document 40, as attribute information of the tag 61. This enables a construction in which the tagged document retrieval means 9 also searches the attaching position when searching the document 40 to which the tag 61 is attached, and refers that information so that the document display means 2 may display, if instructed, the surrounding area of the position at which the tag is attached.

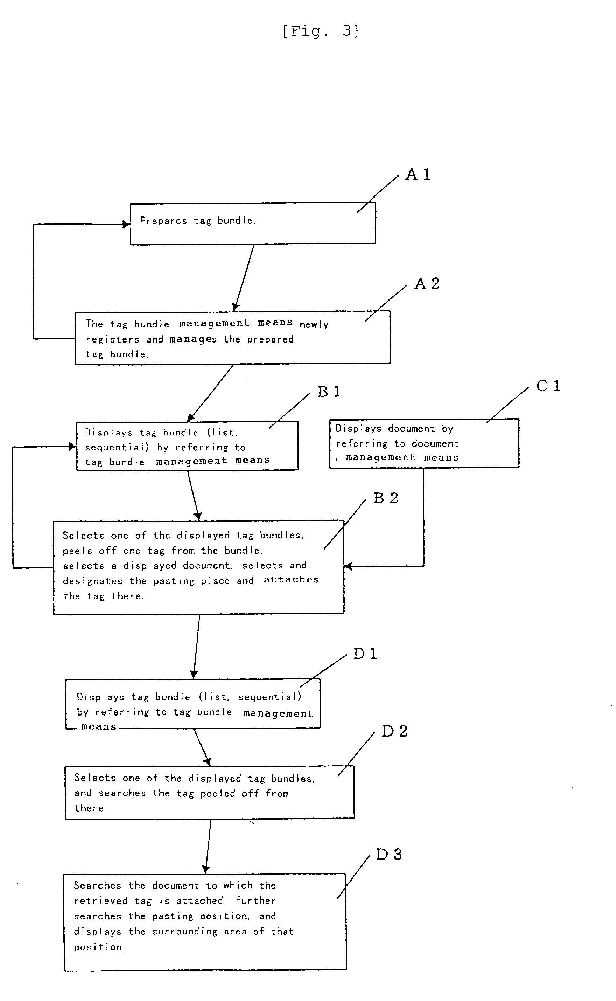

The motions of a case with a construction as described above will be explained hereafter by using Fig. 3, about the points which are different from those of the first embodiment.

First, the user opens the document 40 forming the subject of attaching on the object page, with a tag attaching operation (step B2). This operation is made, in the case of the example given in Fig. 15, with the keys 113a, 113b (<: Retrace page, >: Advance page) on both sides of the page indicating frame 112 displayed under the respective documents 40, but any method may be used as a matter of course.

In this state, it becomes possible to peel off the tag 61 from the tag bundle 60, and attach it on a specific page of a specific document 40. As the attaching of the tag 61 is completed this way (click the "OK" key in said popup frame 120 in Fig. 17), the tag management means 7 manages position information or page number designated here along with said tag bundle 60 peeled from the tag as above and tagged document 40.

Next, in the document retrieval (step D3), the tagged document retrieval means 9 searches the document to which the tag 61 retrieved in tag retrieval (step D2) is attached, and displays the list of documents 40 with the document display means 2. If the user selects a specific document from among a plural number of documents thus given in list (double-clicks the left button of the mouse, for example), said document display means 2 refers to the position (page) information (controlled by the tag management means 7) specified in said tag attaching, and also searches the position of the respective tags attached to that document and displays said selected document in expanded view.

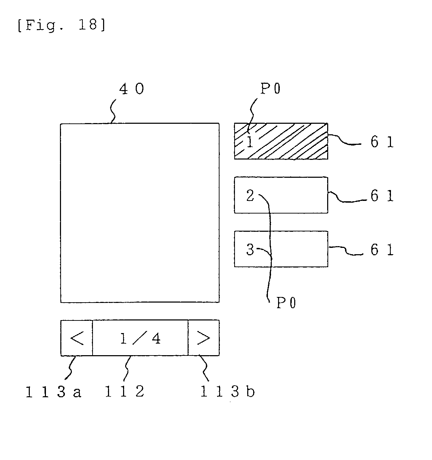

For example, it may be so arranged that the tags 61 attached on the document concerned are all displayed near the document given in expanded view as shown in Fig. 18, together with the corresponding pages Po, and the tag 61 corresponding to the currently displayed page is displayed in a visually recognizable way such as highlight, etc. Here, if the displayed page is changed (click said key 113a or key 113b), said highlighted tag 61 is also changed.

As explained above, it is possible to specify the attaching position when attaching the tag 61, and search that position and display the surrounding area when searching and displaying the document 40 to which the tag 61 is attached. This makes it possible to solve the problem, in the document control by folder, that what can be made is only the classification and control in units of document, thus providing an effect of enabling classification and control of documents 40 based on specific position (page) in the document.

### [Embodiment 3]

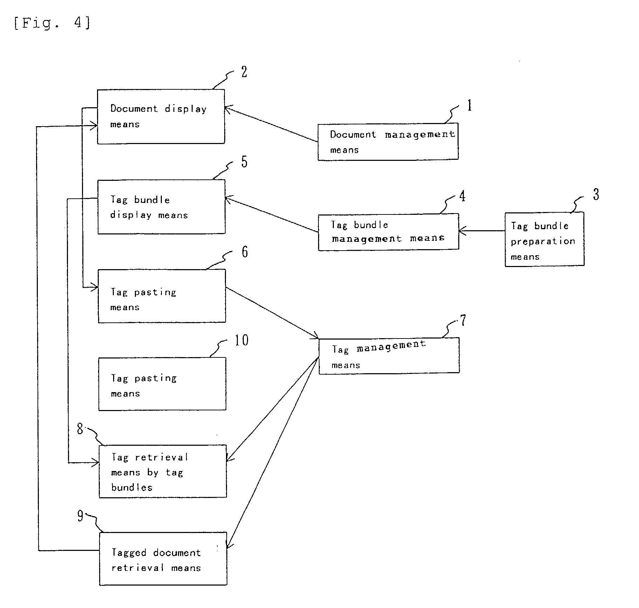

Fig. 4 indicates a construction drawing of the document management system utilizing tags 61 in the third embodiment of the present invention. The point at which it differs from the first embodiment of the present invention indicated in Fig. 1 is that the tag bundle management means 4 controls the name of tag bundle 60 as an attribute information of the tag bundle 60 to be controlled and is provided with a tag bundle name retrieval means 10 for searching tag bundle 60 by the name of the tag bundle 60.

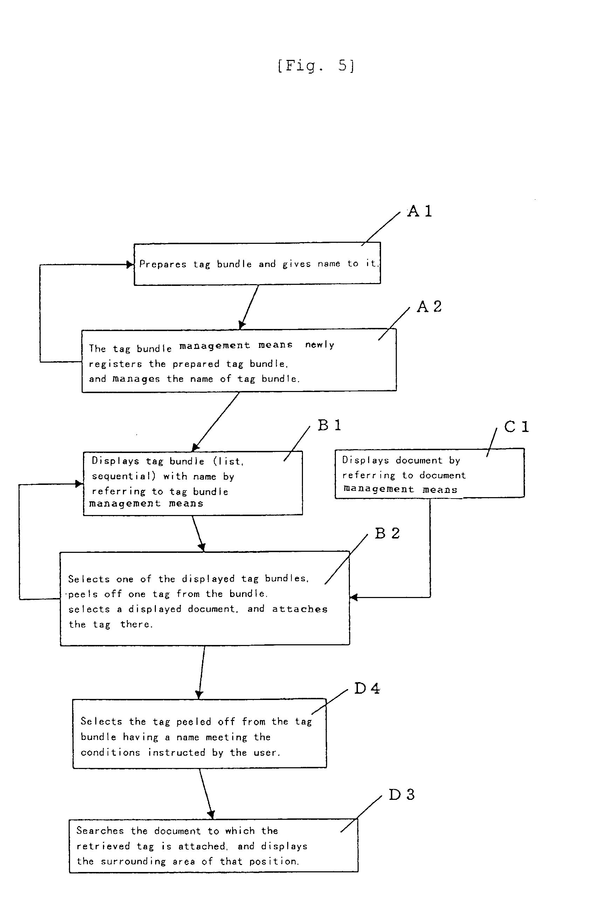

The motions in the case of a construction described above will be explained hereafter on points different from the first embodiment, by using Fig. 5.

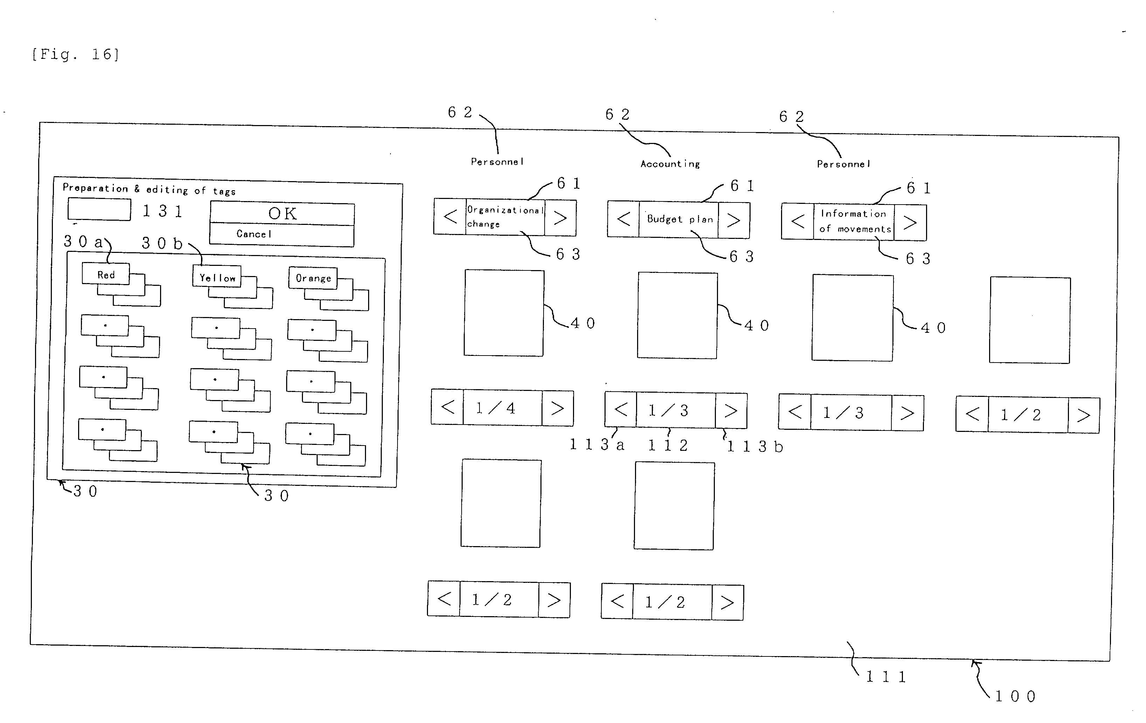

First, if, in the preparation of tag bundle 60 (step A2), the user inputs the tag bundle name 62, in the tag bundle name input frame 131 of the tag bundle preparation frame 130 displayed in the display 100 as shown in Fig. 16, and instructs OK, that tag bundle name 62 is registered (renewed or newly registered) in the tag bundle table T40 indicated in Fig. 13, and both the colour and the tag bundle name 62 are displayed on the tag bundle display means 5.

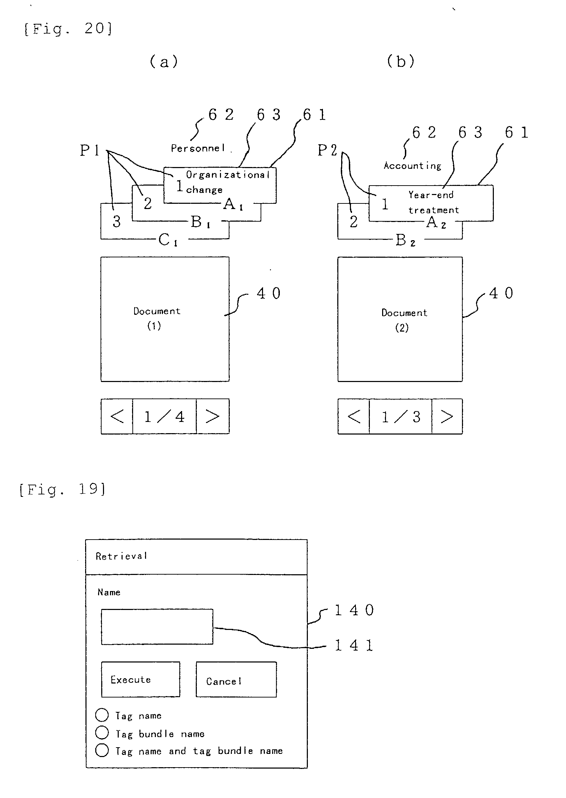

Next, the tag bundle display means 5 also displays the tag bundle name (tag name) retrieval frame 140 as shown in Fig. 19 based on the user's instruction, and displays the input frame 141 of this retrieval frame 140.

If the user inputs the object tag bundle name 62 and clicks the "Execute" key here, the tag bundle name retrieval means 10 starts working and, instead of display of tag bundle 60, selection of tag bundle 60 and retrieval of tag 60 (dl, D2) in said embodiments 1, 2, searches the tag bundle 60 for which a name meeting the conditions indicated by the user is set, by referring to the tag table T70, and searches the tag 61 peeled off from the tag bundle of that name (step D4). Here, the search function will improve if agreement in front part (in case first several letters of the registered tag bundle name are confirmed identical to the letters shown on the frame 141), agreement in rear part (in case last several letters of the registered tag bundle name are confirmed identical to the appearing on the frame 141), or partial agreement (in the case that a arbitrary selected portion of the registered tag bundle name is confirmed identical to the letters shown in the frame 141), are adopted as the method of retrieval for the tag bundle name retrieval means 10.

The results retrieved this way are delivered to the tagged document retrieval means 9, and the tagged document retrieval means 9 searches the corresponding document 40 by referring to the tag table T70, and delivers the results to the document display means 2.

As explained above, according to the present invention, it is possible to set a name for the tag bundle 60 and make retrieval by using that tag bundle name 62. While document control by folder had a problem that the document 40 included in the folder cannot be searched with the name of the folder, the present invention provides an effect of solving this problem by making it possible to search the tag bundle 60 with the tag bundle name 62 and search the document 40 to which a tag 61 peeled off from that tag bundle 60 is attached.

### [Embodiment 4]

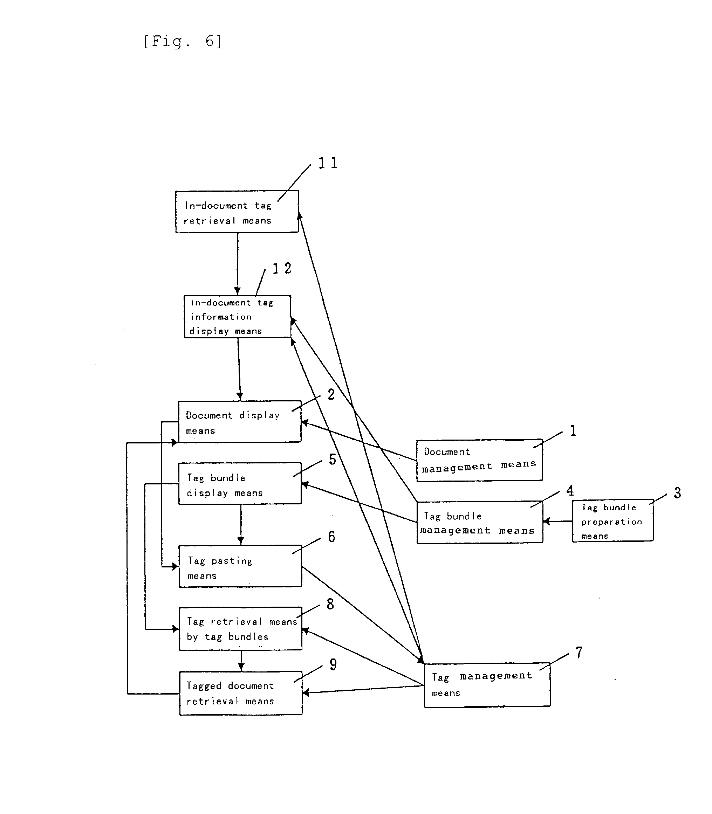

Fig. 6 indicates a construction drawing of the document management system utilizing tags 61 in the fourth embodiment of the present invention. The point at which it differs from the first embodiment of the present invention indicated in Fig. 1 is that this system is provided with an in-document tag retrieval means 11, which searches all tags 61 attached to a specific document, by referring to the information controlled by the tag management means 7, and is provided an in-document tag information display means 12, which displays the tags 61 attached to the document concerned together with the attribute information of that document based on the results of retrieval by said in-document tag retrieval means 11.

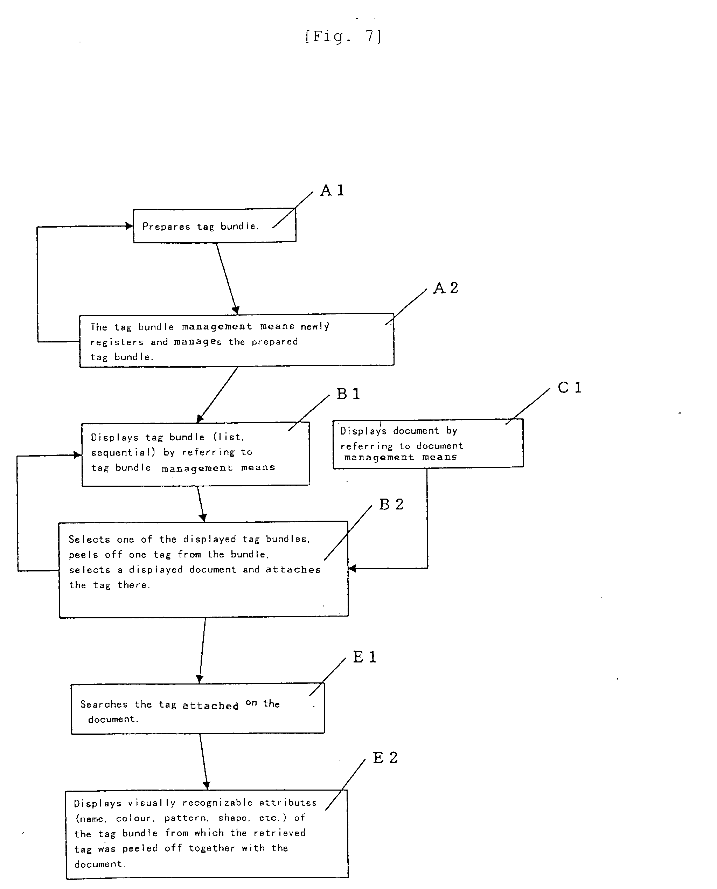

The motions in the case of a construction described above will be explained hereafter on points different from the first embodiment, by using Fig. 7.

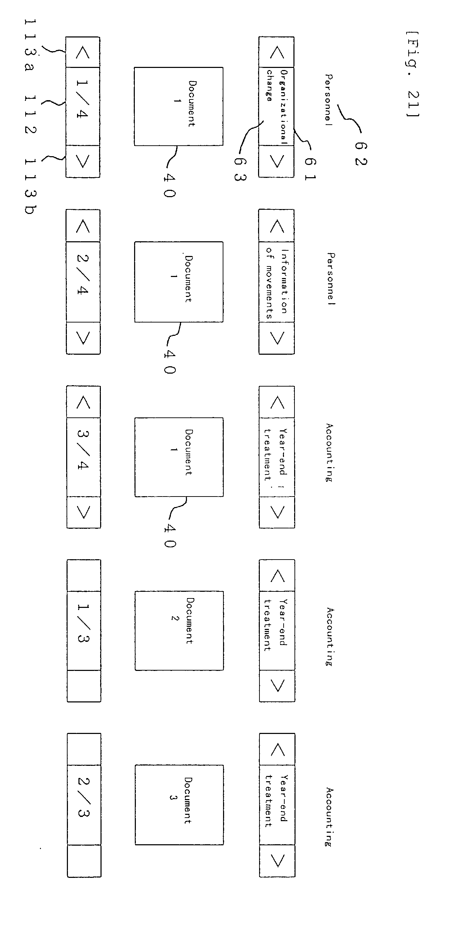

First, when the document display means 2 displays a document based on the user's instruction, the in-document tag retrieval means 11 also starts working, and searches all of the tags 61 attached on that document 40 (step El). The results of this retrieval are delivered to the tagged document display means 12, and the tags 61 attached on the specified document are all displayed in the form of a list page by page as shown in Fig. 20(a), (b), for example (step E2). In this Fig. 20, as an example of said display, the tag 61 attached on the displayed page of the document (tag A attached on the first page in this case) is placed at the top, while the tags 61 (B, C) attached on other pages are placed under it sequentially in a way to be lapped by one half with one another, and on the respective tags 61 are shown the pages P1, P2 on which they are attached, at the left end, for example. Fig. 21, which is another example of display of the results of retrieval, indicates all searched tags together with the pages on which they are attached.

As explained above, according to the present invention, it is possible, when displaying a document 40, to also display the attribute information of the tag bundle 60 from which the tag 61 attached on the document 40 was peeled off, at the same time. While document control by folder had a problem that there is no choice but check the folders one by one to know in which folder the document 40 is stored, the present invention provides an effect of solving this problem by making it possible to visually search, while looking at the documents 40, from which tag bundle 60 the tag 61 attached on the respective documents 40 was peeled off at the same time, thus facilitating visual search of the document 40.

### [Embodiment 5]

The display by said in-document tag information display means 12 may also be made in a way to display, simultaneously with the document, the attribute information (tag bundle name 62, for example) of the tag bundle 60 to which the representative tag 61, determined by such method as prescribed rule, specification by the user, etc., belongs.

Namely, in the case where the tag bundle 60 from which the retrieved tag 61 is displayed simultaneously with the document 40, in said display process of document (step E2), the tag bundle attribute information is displayed only for the representative tag 61, determined by a certain rule such as tag attached on the first page, for example, or specification by the user, etc., even in the case where the searched tag 61 exists in a plural number.

Said state appears at the top part of each document 40 in Fig. 15, for example, and tags other than said representative tag can be displayed one after another by the user's instruction (click the < key and the > key on both sides of each tag 61). In the document 40 at the left top of said Fig. 15, the display of "Personnel" above the tag 61 is the tag bundle name 62 controlled by the tag bundle management means 4, while the display of "Organizational change" in the tag 61 is the tag name explained hereafter.

As explained above, according to the present invention, it becomes possible to display, simultaneously with the document 40, the attributes of tag bundle, only for a representative tag 61, when displaying the attribute information of the tag bundle 60 from which the tag 61 attached on the document was peeled off at the same time, thus providing an effect of enabling display of information helping visual search of the document 40, even in the case where there is no particular space for display.

### [Embodiment 6]

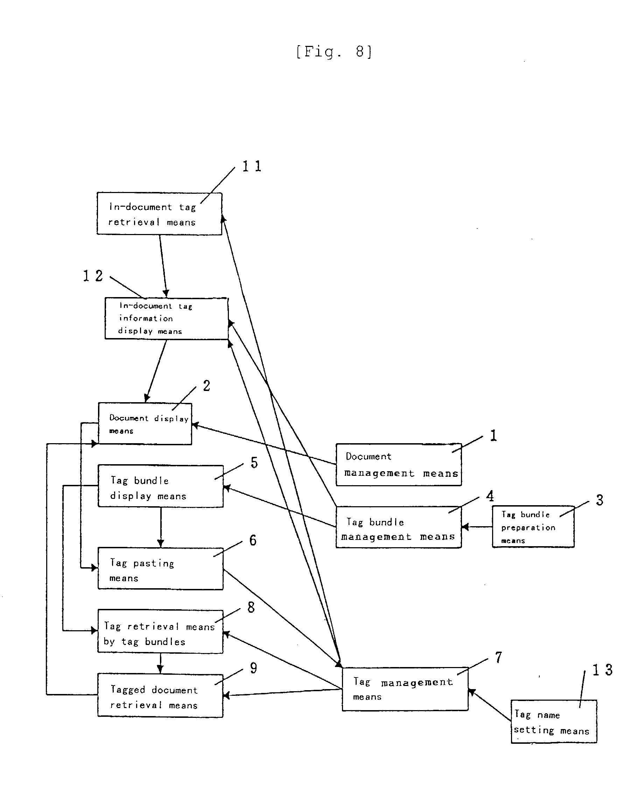

Fig. 8 indicates a construction drawing of the document management system utilizing tags 61 in the sixth embodiment of the present invention. The point at which it differs from the fourth embodiment of the present invention indicated in Fig. 6 is that this system is provided with a tag name setting means 13, which sets name to the tag 61 attach to the document by the tag pasting means 6, to control the set name of the tag 61 as one of the attributes of the tag 61 by the tag management means 7, and that the tag information display means 12 displays the tag name 63 together with the attributes of the tag bundle 60, simultaneously as the document 40.

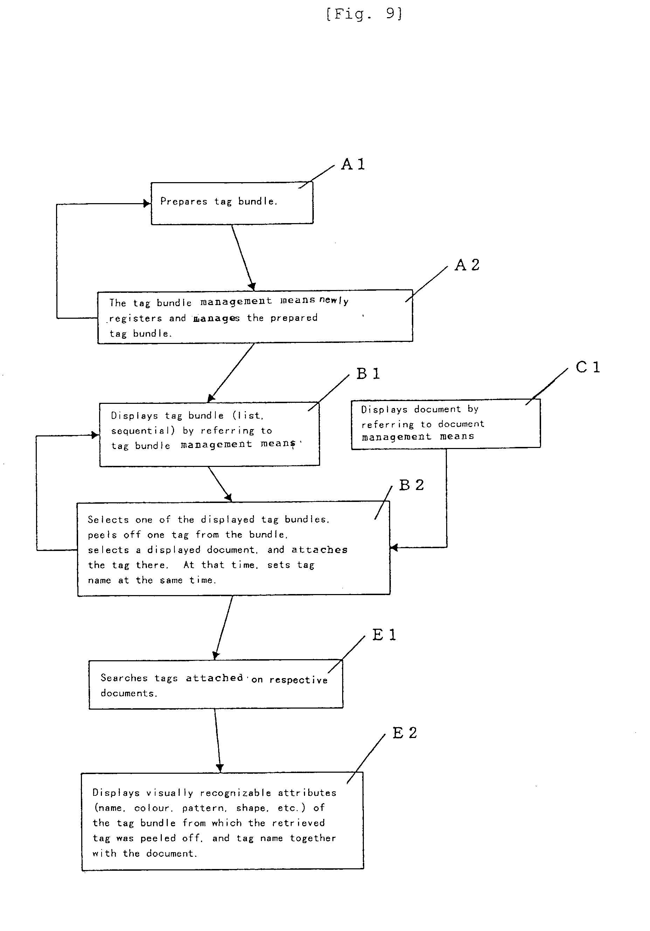

The motions in the case of a construction described above will be explained hereafter on points different from the fourth embodiment, by using Fig. 9.

In said tag attaching process (step B2), a popup frame 120 is displayed as shown in said Fig. 17, when the tag 61 is peeled off from the tag bundle 60 and attached to the document 40, and, as the user instructs input of prescribed tag name in the tag name frame 121 in this popup frame 120, the tag name setting means 13 registers that tag name in the tag management means 7.

Next, as the user instructs display of the tag name (tag bundle name) retrieval frame 140 indicated in Fig. 19, inputs the object tag name of the input frame 141 in the retrieval frame 140, and clicks the "Execute" key, the in-document tag retrieval means 11 starts working, and said input tag 61 is searched (step E1).

Next, in the displaying of the retrieved document 40 (step E2), the tag 61 attached on the document and the tag name 63 are displayed simultaneously, together with the attribute information of the tag bundle 60 from which the tag 61 was peeled off and the document. To explain by taking the document 40 at the left top in the document list display field 111 in Fig. 15, "Organizational change" displayed in the tag 61 becomes the tag name.

Also in this retrieval, the searching capacity improves if agreement in front part, agreement in rear part or partial agreement are adopted as the method of retrieval for the in-document tag retrieval means 11, as in the case of said tag bundle name retrieval.

As explained above, according to the present invention, it becomes possible to display the tag name 63 simultaneously with the document in addition to the attribute information of the tag bundle 60 from which the tag 61 attached to the document 40 was peeled off, thus providing an effect of making it possible to visually search the document 40 easily even in the case where it is hard to identify the document 40 with only the attribute information of the tag bundle 60.

Moreover, the present invention also provides another effect of making it possible to perform character search by using this tag name 63 as keyword, to search the tag 61 and search and display the document 40 to which the tag 61 is attached. Furthermore, in Fig. 19 for example, by inputting the tag name after the input of the tag bundle name, it also becomes possible to make a tag retrieval combining character search of tag bundle name 62 and character search of tag name 63, to search the document to which the tag 61 is attached.

Still more, by preparing special tag bundle with which, if any single tag 61 is peeled off from a specific tag bundle 60 and attached on a document, that tag becomes the representative tag, and inputting the tag name of that representative tag i.e. the document after the attaching, it becomes possible to set a document name, and this further makes it possible to perform said character search for both the document name (representative tag name) and the tag name of other tags.

### [Embodiment 7]

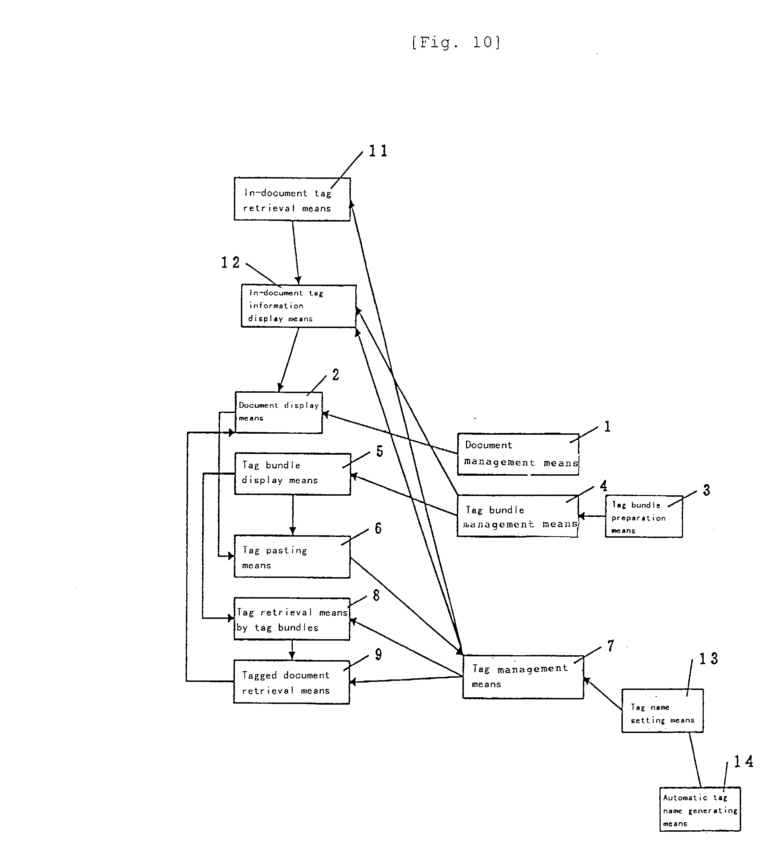

Fig. 10 indicates a construction drawing of the document management system utilizing tags 61 in the seventh embodiment of the present invention. The point at which it differs from the sixth embodiment of the present invention indicated in Fig. 8 is that this system is provided with an automatic tag name generating means 14, which automatically generates the tag name 63 to be set by the tag name setting means 13, by referring to the date, attributes of document 40, etc.

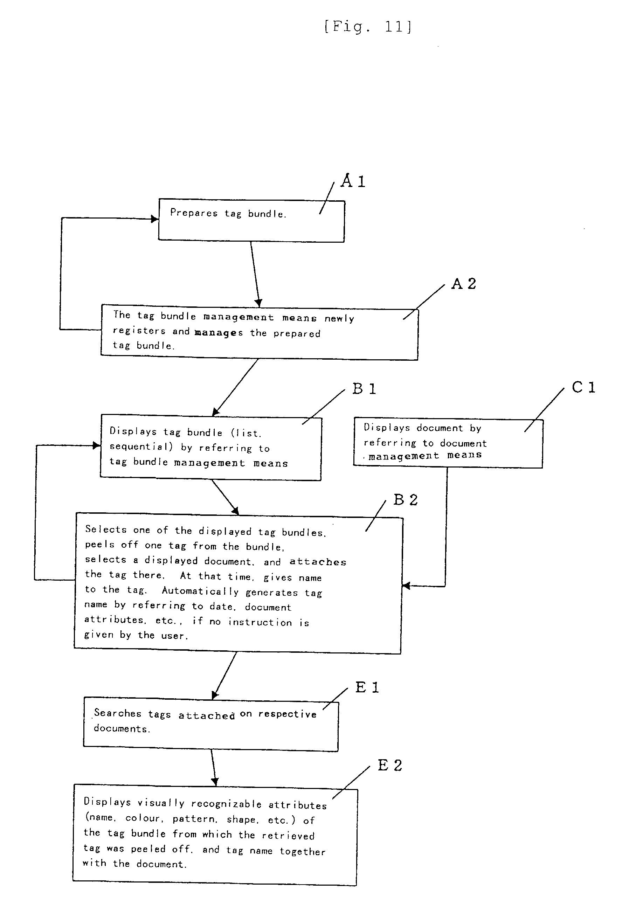

The motions in the case of a construction described above will be explained hereafter on points different from the sixth embodiment, by using Fig. 11.

In said tag pasting (step B2), the automatic tag name generating means 14 automatically prepares tag name 63, by using date of preparation and document attributes (document ID, number of pages, etc.), if no instruction is given by the user when setting the tag name to be attached. If, by referring to the date of the document table T10 indicated in Fig. 14, the date of preparation is 31st October, 1997, for example, the automatic tag name generating means 14 will give the tag name 63 as "97/10/341".

As explained above, according to the present invention, a means for automatically generating tag name 63 can be utilized by the user, thus providing an effect of setting tag name 63 helping the visual search of the document 40 without taking any particular trouble for doing so.

### [Embodiment 8]

As described above, documents registered with tags attached to them can be utilized for complex retrieval (hereinafter referred to as "navigation") as follows:

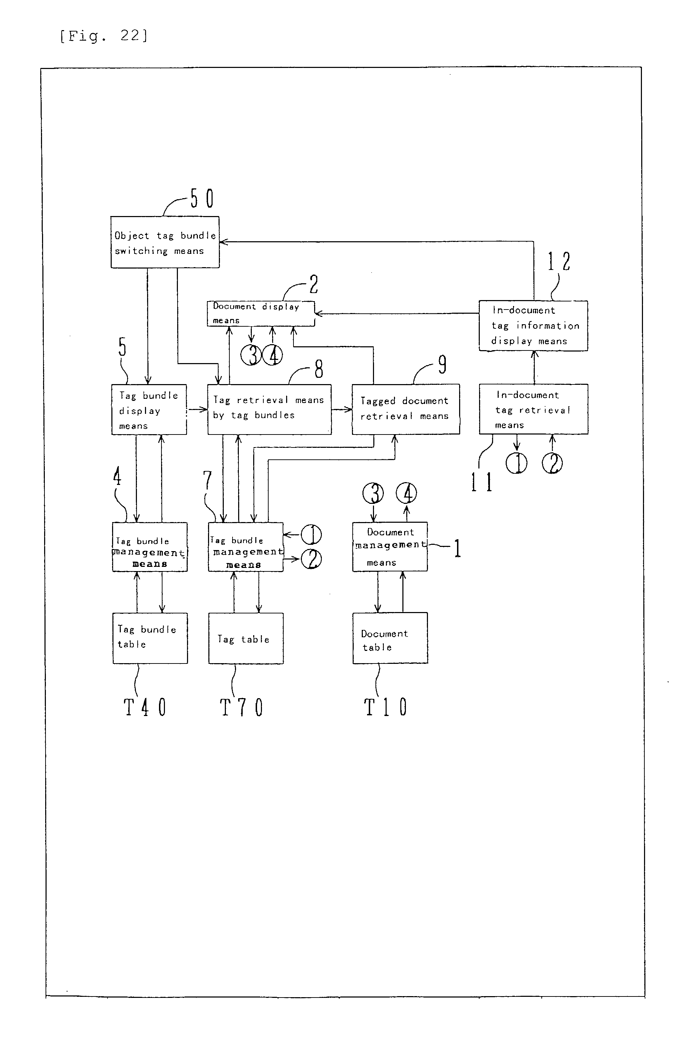

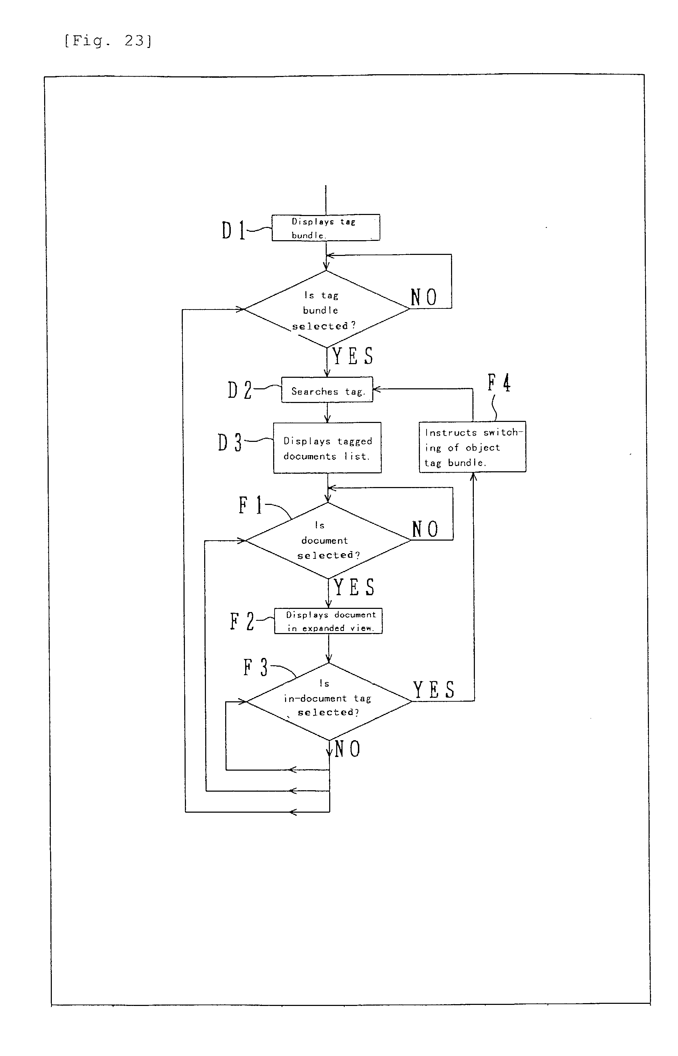

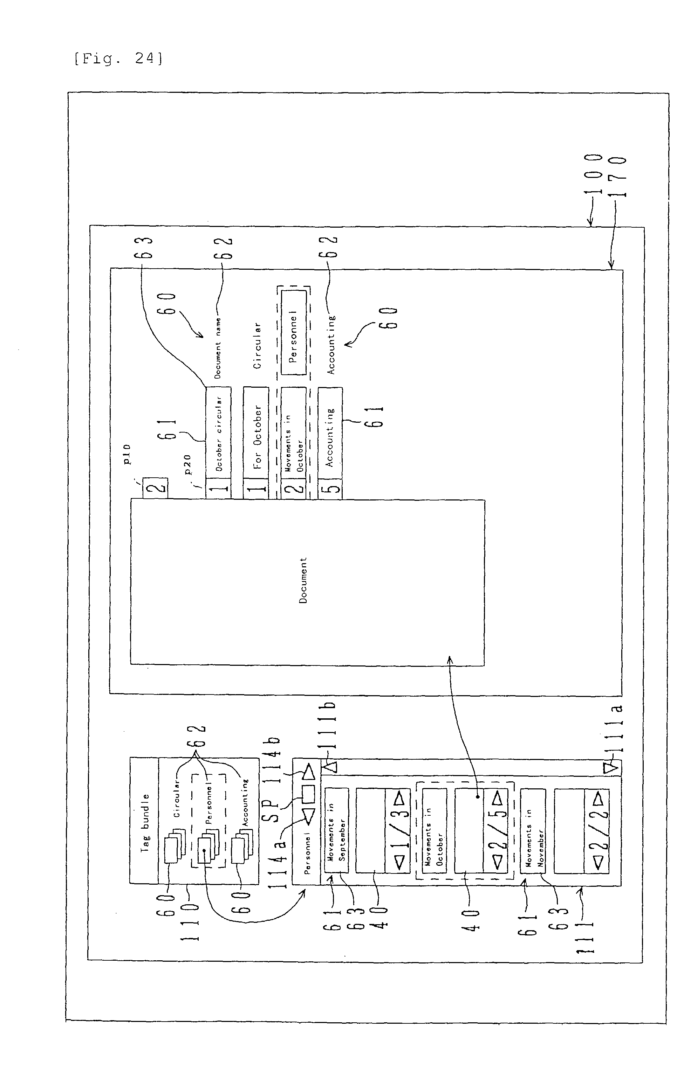

Fig. 22 is a functional block diagram of a complex retrieval by the present invention, while Fig. 23 is a flow chart showing the procedure for it. Moreover, Fig. 24 is an example of the picture used for a complex retrieval.

As shown in Fig. 24, in the initial state of display, the tag bundle management means 4 searches the tag bundle table T40 and extracts all the tag bundles 60 currently used, while the tag bundle display means 5 displays them together with their attributes (colour, tag bundle name 62, for example) in the form of a list in the tag bundle display field 110 of the display 100 (Fig. 23, step D1).

If the user instructs "Navigate" here, the following complex retrieval becomes possible:

Namely, if the user selects either one of the tag bundles 60 displayed as above by using an indicating tool such as mouse, etc. (double-clicks the left button of the mouse, in this example), the tag retrieval means by tag bundles 8 extracts all the tag IDs of the tags 61 belonging to said selected tag bundle 60, by referring to the tag table T70 managed by the tag management means 2 (Fig. 23, step D2).

The tag IDs thus extracted are notified to the tagged document retrieval means 9, and this tagged document retrieval means 9 extracts the ID of the document to which the tag 61 peeled off from said selected tag bundle 60 is attached, and notifies it to the document display means 2. This document display means 2 refers to the document table T10 managed by the document management means 1 and displays the corresponding documents in the form of a list in the document list display field 111 (Fig. 23, step D3). At this time, on each document, the page on which the applicable tag 61 is attached is displayed in reduced size and that tag 61 is displayed above the document together with its tag name 63, as shown in Fig. 24.

Here, said display in the form of a list may be made in a way to show all of the documents retrieved in said document list display field 111 in reduced size, or indicate one document (or a plural number of documents) in the document list display field 111 and arrange to renew the contents of display by using the increment key 111a (or decrement key 111b) of the scroll bar displayed at a corner of the frame 111.

The tag bundle 60 selected as above will be made discriminatable from other non selected tag bundles 60 by being either surrounded by a frame or highlighted.

Next, when the user selected the page (document 40) on which the object tag 61 is attached from the tagged documents list displayed in the document list display field 111 (double-clicks the left button of the mouse, in this example), the document display means 2 displays that page of the document concerned in expanded view in the document display field 170 as shown in Fig. 24 (Fig. 23, steps F1 to F2.in Fig.24 P10 indicates the page number).

At the same time, said in-document tag retrieval means 11 starts working and extracts all tags 61 attached to said specified document and, in response to this extraction, the in-document tag display means 12 displays all tags 61 attached to that document in the form of a list together with their attributes (page P20 on which other tags are attached, tag name 63). At that time, the tag bundle 60 to which the respective tags 61 belong will be displayed together with the tag bundle name 62.

If, in the state where an expanded document is displayed as described above, the user selected a document different from said document in said tagged documents list, an expanded view of the page corresponding to that different document and all tags attached on that document will be displayed in place of the currently displayed expanded document.

At this time, it is also possible to select the document preceding (or subsequent to) the document currently forming the subject of expanded display in the documents list, to make it the object of expanded display, by clicking the < key 114a (or > key 114b) indicated in Fig. 24, for example.

Moreover, by clicking said < key 11a (or > key 114b), it is further possible to change the object of expanded display to the document preceding (or subsequent to) the document currently forming the subject of expanded display in the documents list, one after another at prescribed time interval. At this time, it will be so arranged that said change of display may be stopped at the point in time when the user click the stop key SP.

This makes it possible for the user to browse the documents corresponding to different tags in one same tag bundle one after another.

In addition to a retrieval made in the order of tag bundle to tag to document as described above, the user can also make retrieval by the following method based on said list of tags 61 attached to the currently displayed document:

Namely, if the user selects a specific tag 61 among other tags 61 of the document currently displayed in the document display field 170, the object tag bundle switching means 50 first drives the tag bundle display means 5 to show the contents of display in the tag bundle display field 110 in the same way as when the tag bundle 60 to which said selected tag 61 belongs was selected (a frame is displayed around the selected tag bundle, for example) (Fig. 23, steps F3 to F4).

Moreover, said object tag bundle switching means 50 also drives the tag retrieval means by tag bundles 8 to show the contents of display in the document list display field 111 as a document list to which the tag 61 belonging to the selected tag bundle 60 is attached. Furthermore, the document display means 2 displays the page on which said selected tag 61 is attached, as document displayed in the document display field 170, while the in-document tag display means 12 displays the tags attached to that document in the form of a list in the same way as above, in a way to discriminate them from other tags 61 by surrounding the portion of the selected tags 61 with frame, etc.

This makes it possible for the user to browse the documents corresponding to different tags in one same tag bundle one after another. If the user clicks the stop key again from the state where said specific document is displayed, this system will move into a state of automatic change again.

The respective forms of execution from first to eighth embodiments described above can be executed by a CPU and a program driving that CPU, and that program is conceivable as a program in the state written on a portable recording medium or a fixed type recording medium such as hard disc, etc.

As described above, according to the present invention, it becomes possible to perform, on the computer screen, the same work as that executed by human hand of peeling off one tag from a tag bundle prepared for classifying documents and attaching it on a document.

And yet, since a tag management means manages said attached tags, the user can immediately display, by selecting a specific tag bundle, a list of all documents to which the tags belonging to the tag bundle concerned belong.

Furthermore, by selecting a specific document from said displayed document list, the user can show an expanded view of the document concerned, display other tags attached on the document concerned and, in addition, by selecting either of other tags, he can also display the document (page) on which the tag concerned is attached.

This makes it possible to make flexible retrieval even when one document is classified into many different categories (attach many different kinds of tag), enabling carefully thought document management.

## Claims

1. A document management system provided with a document management means for managing electronic documents stored in a storing means, and a document display means for displaying the object document with an input of matters identifying the electronic document concerned, comprising
a tag bundle management means for managing tag bundle provided with visually recognizable attribute, based on such attribute, comprising
a tag bundle display means for displaying tag bundle managed by said tag bundle management means in the form of a list based on said attribute, and
a tag pasting means for providing the user with an operation of peeling off one tag from a specific tag bundle indicated by the said bundle display means and attaching it to a specific document displayed by said document display means, and
a tag management means for managing the attribute information of the tag attached by the user by utilizing said tag pasting means.

2. A document management system as defined in Claim 1, further comprising
a tag retrieval means by tag bundles for searching, as the user selects one of the tag bundles displayed by said tag bundle display means, all the tags peeled of from the selected tag bundle, by referring to the information of the tag bundle managed by said tag management means, and
a tagged document retrieval means for searching tagged documents retrieved by said tag retrieval means by tag bundles by referring to the information of the tags managed by said tag management means, and displaying them in the form of a list.

3. A document management system as defined in Claim 1, comprising a tag bundle preparation means for preparing said tag bundle.

4. A document management system as defined in Claim 1, wherein said tag management means manages, as attribute information of the tags managed, at least 2 of the tag bundle from which the tags are peeled off, and the tagged documents, so that said tag retrieval means by tag bundles and the tagged document retrieval means may refer to such information when searching tags and documents.

5. A document management system as defined in Claim 1, wherein said tag management means manages, as attribute information of the tags managed, the information of attaching position in addition to the tag bundle from which the tag is peeled off and the document on which the detached tag is attached, so that said tagged document retrieval means may also search the attaching position when searching tagged document and that, by referring to that information, said document display means may display the surrounding area of that tagged position.

6. A document management system as defined in either of Claims 1 to 4, wherein said tag management means manages, as one of the attribute information of the tags managed, the name of the tag bundle, and comprises a tag bundle name retrieval means to search the tag bundle with the name of the tag bundle concerned.

7. A document management system as defined in either of Claims 1 to 6, comprising
an in-document tag retrieval means for searching all tags attached to document, by referring to the information managed by the tag management means, and
an in-document tag information display means for displaying the tag bundle from which the tag was peeled off and its attribute information together with the document.

8. A document management system as defined in Claim 7, wherein the in-document tag information display means displays the attribute information of the representative tag bundle determined based on a certain rule or determined based on the user's instruction, together with the document.

9. A document management system as defined in either Claim 7 or 8, comprising a tag name setting means for setting title to the tag attached to the document by said tag pasting means, so that the tag management means may manage the tag name set this way as one of the attributes of the tag and that, by referring to this information, the in-document tag information display means may display the tag name together with the attributes of said tag bundle together with the document.

10. A document management system as defined in Claim 9, comprising an automatic tag preparation means for automatically preparing the tag name to be set by the tag name setting means, based on a prescribed rule.

11. A document management system provided with a document management means for managing electronic documents stored in a storing means by attaching tag to identify the documents, and a document display means for displaying the object document with an input of matters identifying the electronic document concerned, comprising
a tag bundle management means for managing tag bundle provided with visually recognizable attribute, based on such attribute, comprising
a tag bundle display means for displaying tag bundle managed by said tag bundle management means in the form of a list based on said attribute,
a tag management means for managing the attribute information of the tags belonging to a specific tag bundle attached on said specific document,
a tag retrieval means by tag bundles for searching, as the user selects one of the tag bundles displayed by said tag bundle display means, all the tags belonging to the selected tag bundle, by referring to the information of the tag bundle managed by said tag management means, and
a tagged document retrieval means for searching tagged documents retrieved by said tag retrieval means by tag bundles by referring to the information of the tags managed by said tag management means, and displaying them in the form of a list.

12. A document management system as defined in Claim 11, further comprising
an in-document tag retrieval means for searching, on the selected document in said tagged documents displayed in the form of a list, all tags attached to the document concerned, by referring to the attribute information managed by the tag management means, and
an in-document tag information display means for displaying all tags retrieved by said in-document tag retrieval means, together with the corresponding document.

13. A document management system as defined in Claim 12, wherein the in-document tag information display means also displays, in corresponding to the respective tags displayed, the attributes of the tag bundle to which those tags concerned belong.

14. A document management system as defined in Claims 11 to 12, wherein said tag management means manages, as attribute information of the tags managed, at least 2 of the tag bundle to which the respective tags belong, and the tagged documents, so that said tag retrieval means by tag bundles and the tagged document retrieval means may refer to such information when searching tags and documents.

15. A document management system as defined in of Claims 11 to 14, wherein said tag management means manages, as attribute information of the tags managed, the information of attaching position in addition to the tag bundle and the tagged document, so that said tagged document retrieval means may also search the attaching page when searching tagged document and that, by referring to that information, said document display means may display the attaching page.

16. A document management system as defined in Claim 15, wherein said in-document tag retrieval means searches only the tag attached on the currently displayed page, to display it on the in-document tag information display means.

17. A document management system as defined in Claims 11 to 16, comprising an object tag bundle switching means for driving, as the user selects a specific tag among the tags displayed by said in-document tag information display means, said tag retrieval means by tag bundles, said tagged document retrieval means and said in-document tag retrieval means, based on the selected tag and the attributes of the tag bundle to which the tag concerned belongs.

18. A document management system as defined in Claims 11 to 17, wherein said tagged document display means switches, when displaying the document retrieved by said tagged document retrieval means together with its in-document tag, the object tagged document at prescribed time intervals based on the user's instruction for starting, and also fixes the display of the selected document and in-document tag based on the user's instruction for stopping.

19. A document management method for managing electronic documents stored in a storing means with a document management means, and displaying the object document with a document display means by inputting matters identifying the electronic document concerned, characterized in that it manages
the processing of display for displaying at least one kind of tag bundle managed by a tag bundle management means based on visually recognizable attributes,
the processing of attaching for peeling off one tag from a specific tag bundle in said displayed tag bundle and attaching it to a specific document displayed by said document display means, and
the attribute information of the tag attached to said specific document by utilizing a tag management means.

20. A document management method as defined in Claim 19, comprising a processing of document display for searching and displaying, as the user specifies a specific tag bundle displayed with said processing of tag bundle display, the tag belonging to that tag bundle and the document to which that tag is attached.

21. A document management method for managing electronic documents stored in a storing means by attaching tag to identify the documents with a document management means, and displaying the object document with a document display means by inputting information regarding tag identifying the electronic document concerned, characterized in that it performs,
in the state where said tag bundle is managed by a tag bundle management means based on visually recognizable attributes and that the attribute information of the tags belonging to a specific tag bundle attached on said specific document is managed by a tag management means,
the processing of tag bundle display for displaying said tag bundle based on said attributes,
the processing of document list display for searching, as the user selects one of said displayed tag bundles, all the tags belonging to the selected tag bundle, by referring to the information of the tags managed by said tag management means, and displaying the tagged document retrieved here in the form of a list, and
the processing of document display for displaying, for the specific document selected by the user, a list of tags attached to the document concerned together with the corresponding document, by referring to the attribute information managed by the tag management means.

22. A document management method as defined in Claim 21, wherein, as the user selects a specific tag in the tag list displayed with said processing of document display, the tag bundle to which the tag concerned belongs, and said processing of document list display and the processing of document display corresponding to the selected tag bundle are further made.

23. A medium recording the respective procedures as defined in said Claims 19 to 22 as program.
